# EUROPEAN PATENT SPECIFICATION

(11) **EP 1 190 941 B1**
(45) Date of publication and mention of the grant of the patent: **24.05.2006**
(21) Application number: 01122887.1
(22) Date of filing: 24.09.2001
(51) Int. Cl.: B62D 43/04

(54) **A support device for a spare wheel of a vehicle**
Halterung für ein Kraftfahrzeugersatzrad
Support pour roue de secours d'un véhicule

(30) Priority: 22.09.2000 IT TO000891
(43) Date of publication of application: 27.03.2002
(73) Proprietor: IVECO S.p.A., 10156 Torino (IT)
(72) Inventor: Moi, Luciano, 46027 S. Benedetto Po (IT); Torelli, Dario, 46020 Pecognaga (IT)
(74) Representative: Gervasi, Gemma

(56) References cited:
- EP-A- 0 739 808
- EP-A- 0 952 070
- US-A- 2 777 591
- US-A- 4 428 513

## Description

The present invention relates to a support device for a spare wheel of a vehicle, particularly but not exclusively of a commercial vehicle.

Devices of the above-mentioned type are known, which substantially comprise a support on which the spare wheel is secured in operation, for example by means of bolts, which support is hinged, in correspondence with one of its ends, to the vehicle frame and it can be connected, in correspondence with an opposite end thereof, to said frame by means of releasable fastening means, generally of the screw and nut type.

Therefore, the removal of the spare wheel is effected by disengaging said fastening means and by allowing the support to rotate, under its own weight, about the hinge axis until it reaches a lowered position in which it rests on the ground; successively, the operator may gain access to the compartment situated between the spare wheel and the frame, remove the bolts securing the wheel to the support and withdraw the wheel from said support.

These operations are generally difficult because, once the support has been lowered, the space present between the wheel and the frame is extremely limited and access by the operator for the removal of the bolts securing the wheel to the support is difficult. US 2 777 521 discloses a spore type carrier with a support plate connected to the vehicle frame by a leg hinged to the frame, and a by a leng rage mechanism capable of removably engaging the plate and clamp the tyre between the plate and the frame.

EP 0952070 discloses a support device for functional parts, with a telescopical profile, hinged to the frame at one end and linked to the frame at the other end by a book. Document US2777521 covers the preamble features of claim 1.

To facilitate the removal of the spare wheel and placing it on the vehicle, support devices have been developed in which a trolley carrying the spare wheel is mounted to slide on a pair of mutually parallel guides, the corresponding ends of which are hinged about a common horizontal axis.

The trolley can move along the guides between a rest position, in which it is accommodated in a compartment of the vehicle, and a removal position, in which it is partly removed from said compartment to allow the withdrawal of the spare wheel or so as to be removed from said guides.

In turn, the guides can move between a raised position, in which they are fastened to the frame by releasable fastening means, for example by means of screw and nut devices, and they lock the trolley in the rest position, and a lowered position, in which the trolley can be caused to slide along said guides into and out of the removal position.

However, here too, because of the extremely restricted access space to the support device, it is not always easy to release the fastening means. Therefore, in this sector there is requirement for further improvements which make it possible to facilitate to a greater extent operations undertaken by the operator in removing the spare wheel and placing it on the vehicle.

The object of the present invention is to devise a support device for a spare wheel of a vehicle, which makes it possible to obviate the disadvantages associated with the above-mentioned known devices.

This object is achieved by the present invention in that it relate to a support assembly for a spare wheel of a vehicle, in particular a commercial vehicle, comprising:
- guide means adapted to be connected to a frame of said vehicle so as to be able to rotate about an approximately horizontal axis of rotation, between a raised position and a lowered position, and defining with said frame a compartment for accommodating said spare wheel;
- a trolley adapted to carry said spare wheel, movable along said guide means between a rest position inside said compartment and a removal position in which it is at least partly removed from said compartment so as to allow the withdrawal of said spare wheel, and
- releasable fastening means acting in an approximately vertical connecting direction and in a position spaced apart from said axis of rotation for fastening to said frame said guide means in said raised position and said trolley in said rest position;
characterised in that said trolley is able to rotate integrally with said guide means about said rotation axis and said fastening means comprise at least one coupling element which is connected in a swinging manner either to said frame or to said trolley and which is displaceable in a swinging direction transverse to said connecting direction to and from a coupling configuration with a receiving element associated either with said frame or with said trolley.

With a view to a better understanding of the present invention a preferred embodiment will be described non-restrictively by way of example below, with reference to the accompanying drawings, in which:
Figure 1 is side view of a support device for a spare wheel of a vehicle, in accordance with the present invention;
Figure 2 is a view from above, on a reduced scale, of the support device in Figure 1;
Figure 3 is a partial section, on an enlarged scale, along the line III-III in Figure 1;
Figure 4 is a side view of the support device in Figure 1, in a different operating position; and
Figure 5 is a side view, on an enlarged scale and partly in section, of a detail of the support device in Figure 1.

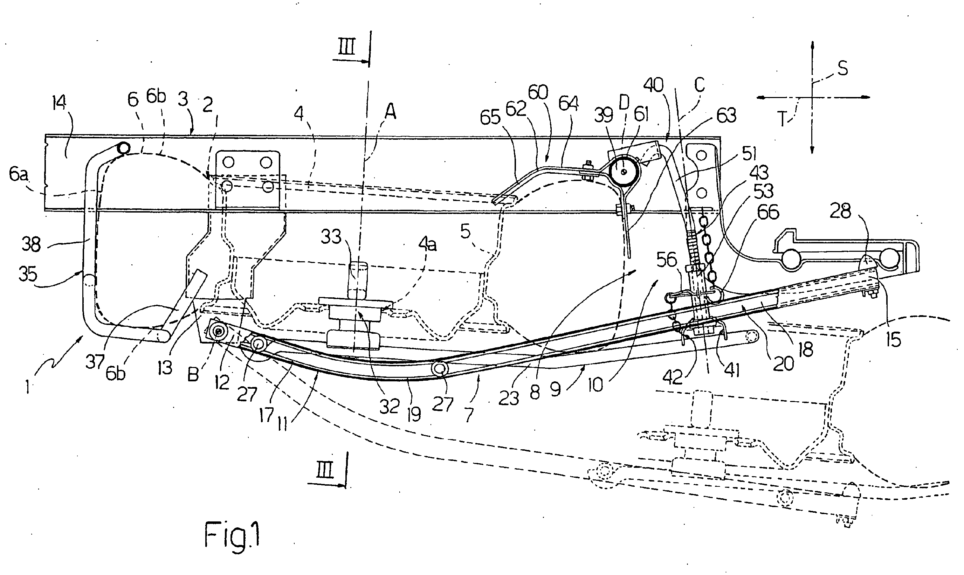

Referring now to Figures 1 to 4, the reference numeral 1 generally denotes a support device for a spare wheel 2 of a commercial vehicle, known per se and not shown as a whole, said spare wheel having an axis A. In particular, said commercial vehicle is provided with a frame 3, of which the accompanying drawings show the component parts necessary for an understanding of the present invention.

As is known, the wheel 2 comprises a rim 4, having an axis A, defining a central hole 4a adapted to be engaged by an associated wheel hub (not shown) of the vehicle, and by a tyre 6 mounted conventionally on a peripheral flange 5 of the rim 4 itself.

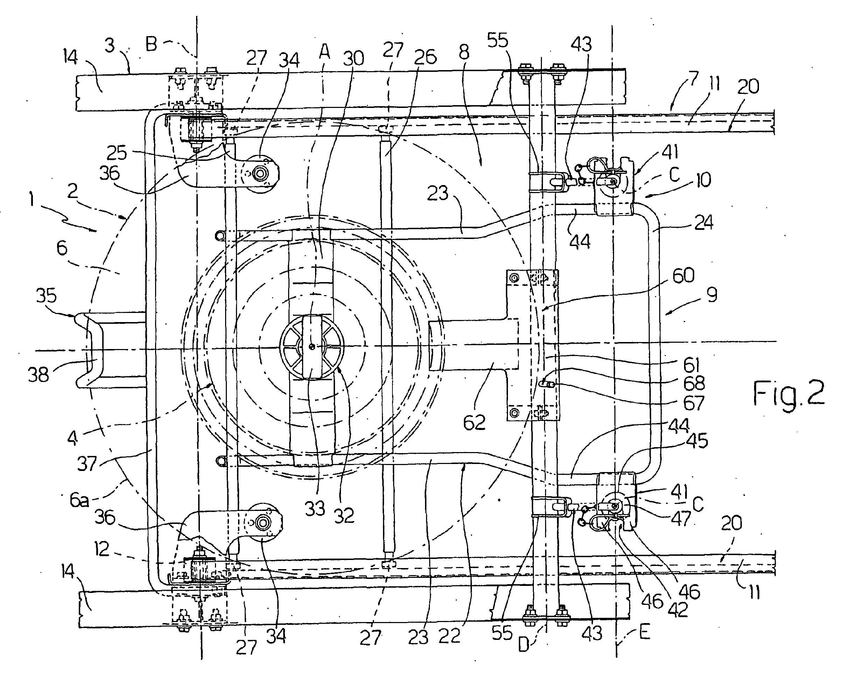

Referring now to Figures 1,2 and 4, the support device 1 essentially comprises a guide assembly 7 connected to the frame 3 so as to be able to rotate about a horizontal axis B, between a raised position and a lowered position, and defining with said frame 3 a compartment 8 for accommodating the wheel 2 situated low down with respect to the vehicle, a trolley 9 carrying the wheel 2 in a releasable manner and mounted to slide along the guide assembly 7 between a rest position inside the compartment 8 (Figures 1 and 2) and a removal position (Figure 1, dashed line), in which it is partly removed from the compartment 8 so as to allow the withdrawal of said wheel 2, and releasable fastening means 10 acting in an approximately vertical connecting direction C and in a position spaced apart from the axis B so as to fasten jointly to the frame 3 the guide assembly 7 in the raised position and the trolley 9 in the rest position. The guide assembly 7 defines a handling path of the trolley 9 between the rest and withdrawal positions resulting from a combination of movements in a vertical direction S and in a horizontal direction T; as is evident from Figures 1,4 and 5, the connecting direction C is slightly inclined relative to the vertical direction S.

In particular, the guide assembly 7 comprises a pair of guide sections 11 extending parallel to one another and each having corresponding ends 12 hinged about the axis B to respective brackets 13 projecting downwards from associated side members 14 of the frame 3. The guide sections 11 are connected to one another, with their ends 15 opposite the ends 12 in alignment, by a cross member (not shown in the accompanying drawings) and they can rotate about the axis B between the aforementioned raised and lowered positions. In particular, in the lowered position, adjacent the ground, the guide sections 11 allow the trolley 9 to slide between the rest position and the removal position.

In side view, each guide section 11 is of "skid" shape and comprises two straight portions 17,18 which between them define an obtuse angle of less than 1800 and are joined by a curved connecting portion 19; in particular, the portion 17 extends from the associated hinge bracket 13 and is of shorter length than the length of the portion 18.

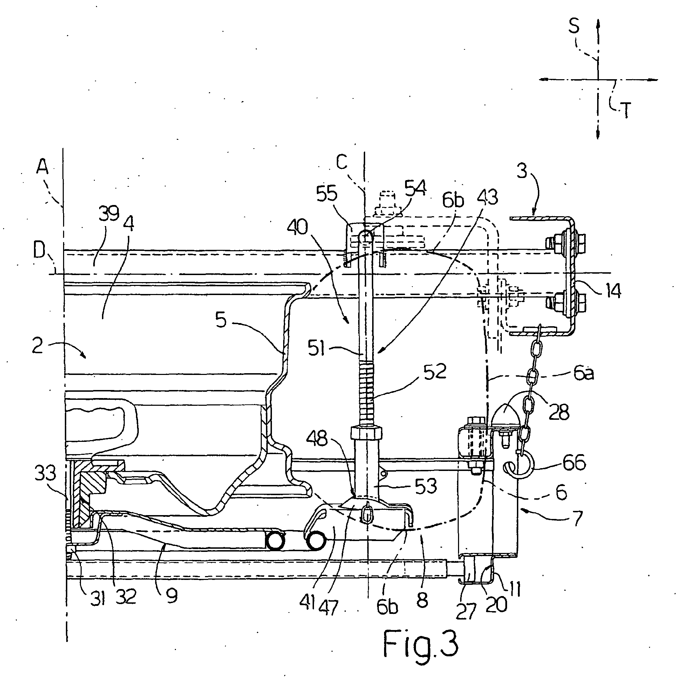

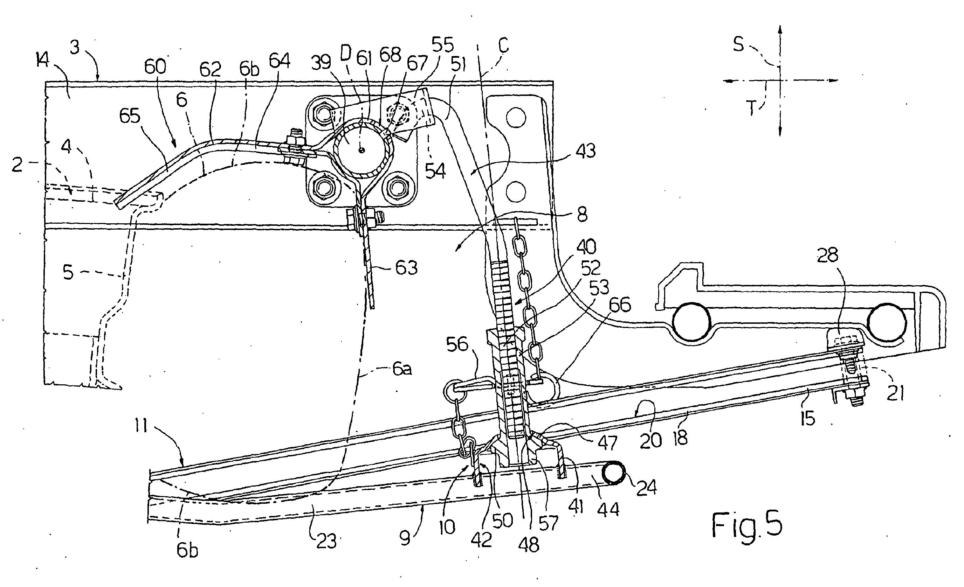

The guide sections 11 define respective longitudinal guide cavities 20 which are closed with the ends 15 in alignment by respective removable stops 21 (Figures 3 and 5) and which are of C-shaped cross-section with facing concavities. In addition, respective bumpers 28 of elastomeric material project from the ends 15 of the guide sections 11 and are adapted to co-operate by abutting against associated portions of the frame 3 in the raised position of said guide sections 11.

Referring particularly to Figure 2, the trolley 9 comprises a plurality of bars which are welded to one another so as form a substantially flat structure on which the wheel 2 can be mounted with its axis A substantially orthogonal to the plane in which said trolley 9 lies.

In particular, the trolley 9 comprises a substantially U-shaped section member 22 having a pair of arms 23 extending orthogonally from respective opposite ends of a substantially straight operating bar 24 which, in operation, is intended to define a grip or handle portion for the handling of said trolley 9. Furthermore, the trolley 9 comprises a pair of cross members 25,26 which are secured orthogonally to the arms 23, which project laterally from said arms 23 and which are provided, in alignment with portions thereof at opposite ends, with respective idle rollers 27 adapted to engage in pairs in the associated cavities 20 formed by the guide sections 11. More precisely, the cross member 25 extends in alignment with respective free ends of the arms 23, whereas the cross member 26 extends in an intermediate position between the bar 24 and said cross member 25.

Finally, the trolley 9 comprises a plate 30 of substantially quadrangular section, the opposite end edges of which are secured to respective arms 23 and extend parallel to the cross members 25,26 and in an intermediate position between them. A nut 31 and a tubular centering peg 32 are secured to a central portion of the plate 30 and project therefrom on opposite sides, which peg can engage in the hole 4a of the rim 4 of the wheel 2. The nut 31 and the peg 32 are coaxial to one another and to a through-hole (not shown in the accompanying drawings) of the plate 30 and are adapted to be engaged, together with said through-hole, by a closing screw 33 for fastening the wheel 2 to the trolley 9.

As is evident from the accompanying drawings, the compartment 8 is bounded by the side members 14 of the frame 3, by the guide sections 11 and by a series of abutment assemblies for the wheel 2 attached to said side members 14. In particular, said abutment assemblies comprise a pair of disc-like supports 34 upwardly defining the compartment 8, and a shaped structure 35 defining the bottom of said compartment 8.

More precisely, the supports 34 are suspended from respective L-shaped supports 36 projecting orthogonally towards one another from the associated side members 14, starting from the extension zone of the brackets 13.

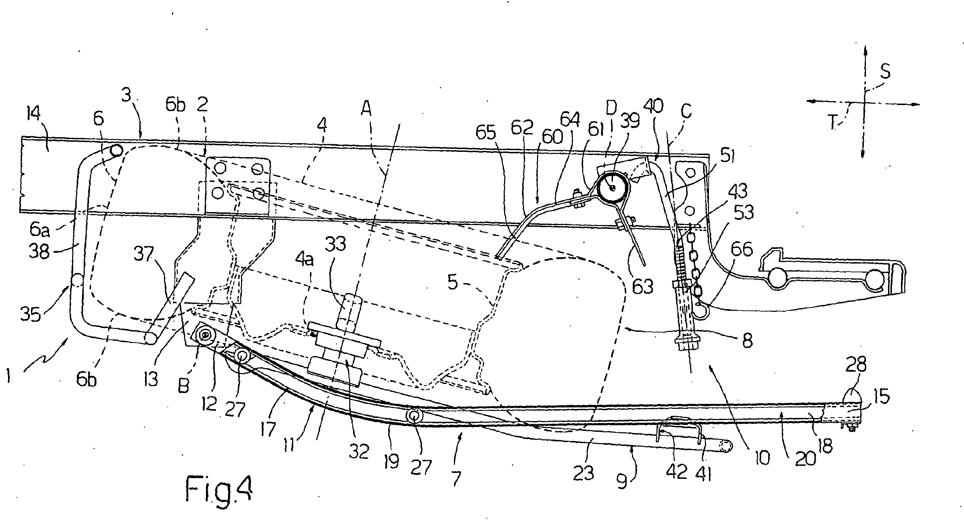

The structure 35 comprises a cross member 37 secured between respective lower end portions of the brackets 13, and an upright 38 extending upwards from a central portion of the cross member 37 and of C-shaped section in side view (Figures 1 and 4) for receiving the tread 6a of the tyre 6 of the wheel 2 and part of respective side walls 6b of said tyre 6.

With reference to the accompanying drawings, the fastening means 10 comprise two connecting assemblies 40 adapted to connect a horizontal cross member 39 extending between the side members 14, with respective arms 23 of the trolley 9 in a position adjacent to the operating bar 24; in particular, the cross member 39 has an axis D parallel to the axis A and orthogonal to the side members 14.

Each connecting assembly 40 comprises a receiving member 41 projecting from the associated arm 23 of the trolley 9 towards the adjacent guide section 11 and defining a C-shaped seating 42 with its concavity turned towards said guide section 11, and a coupling element 43 which is suspended from the cross-member 39 in a swinging manner in a direction E transverse to the direction C and substantially parallel to the axis D, and it can be displaced in said direction E towards and from a coupling configuration with the seating 42 of the associated receiving element 41. To enable the coupling with the associated coupling element 43 to take place, each seating 42 has its concavity facing in the direction E.

Each receiving element 41 projects from an end portion 44 of the associated arm 23 adjacent the operating bar 24 and comprises an anchoring portion 45 welded to the end portion 44 and a pair of projections 46 protruding from the anchoring portion 45 towards the adjacent guide section 11 and defining between one another and with said anchoring portion the seating 42.

Moreover, each receiving element 41 has a C-shaped raised upper edge 47 covering the outer periphery of the associated seating 42 and defining an upper opening 48 from which said seating 42 extends downwards with gradually increasing section.

Each coupling element 43 is of elongate shape and is provided, in the vicinity of the lower end thereof, with an annular enlargement 50 adapted to be inserted inside the seating 42 of the associated receiving element 41 abutting upwardly against the edge 47 so as to prevent downward movement of the trolley 9 and the guide assembly 7.

Each coupling element 43 comprises a shaped tie rod 51 having a cylindrical outer surface, which tie rod is connected in its upper region to the cross member 39 and which has in its lower region an externally threaded portion 52 and an internally threaded cylindrical sleeve 53, screwed on to the portion 52 of the tie rod 51 and integrally defining, level with its lower end, the enlargement 50.

More particularly, each tie rod 51 has an upper end portion 54 bent downwards to define an inverted U-section and engaging in a through-hole in a bracket 55 attached to the cross-member 39.

When they are coupled to the seatings 42 of the receiving elements 41, the sleeves 53 can be screwed on to the associated tie rods 51 so as to exert tension on the connecting assemblies 40 and prevent any danger of accidental uncoupling of said coupling elements 43 and said receiving elements 41. With a view to enabling the sleeves 53 to be screwed and unscrewed along the respective tie rods 51, at their lower end they terminate in respective nuts 57 which can be operated by a spanner.

Furthermore, a split pin 56 is connected by means of a chain to each receiving member 41, which split pin can be inserted through respective transverse through-holes in the associated sleeve 53 and of the associated tie rod 51 so as to provide further security in preventing uncoupling of said receiving element 41 from the respective coupling element 43. Analogously, in the raised position, each guide section 11 can be connected to the associated side member 14 by means of a safety hook 66.

With reference to Figures 1,2,4 and 5, the support device 1 further comprises a lever 60 for correctly positioning the assembly formed by the trolley 9 and by the wheel 2 inside the compartment 8.

The lever 60 is disposed upwardly with respect to the trolley 9 and in a position opposite the structure 35 defining the bottom of the compartment 8; it is hinged about the axis D of the cross member 39 and it can co-operate with the wheel 2 on the side diametrically opposite said structure 35.

The lever 60 has a hollow intermediate portion 61 engaged by the cross member 39 and positioned between the connecting assemblies 40, an operating arm 62 adapted to co-operate with the rim 4 of the wheel 2 so as to receive therefrom, in the stage in which the trolley 9 is being raised so as to connect it to the cross member 39 by means of the connecting assemblies 40, thrust forces tending to rotate said operating arm 62 about the axis D and a pressing arm 63 adapted to co-operate with the tread 6a of the tyre 6 so as to press the wheel 2 into abutment with the structure 35 under the action of the rotation of the operating arm 62.

In particular, the operating and pressing arms 62,63 project from the intermediate portion 61 substantially in directions orthogonal to one another.

The operating arm 62 comprises a shaped plate which has a flat first portion 64 adjacent the intermediate portion 61 and adapted to form an upper abutment for the side wall 6b of the tyre 6 of the wheel 2 opposite that arranged in contact with the trolley 9, and a second portion 65 which is also flat and bent towards the trolley 9, i.e. downwards with respect to the portion 64, and which is adapted to co-operate with the rim 4 of the wheel 2 in the vicinity of the flange 5.

However, the pressing arm 63 comprises a flat plate substantially orthogonal to the portion 64 of the operating arm 62 and extending downwards from the intermediate portion 61 with respect to the overall extension of the operating arm 62 from said intermediate portion 61.

In the absence of load, i.e. interaction with the wheel 2, the lever 60 is arranged under the action of its own weight, which is greater along the operating arm 62, in a first operating position (Figure 4) in which said operating arm 62 is oblique with respect to the vertical direction S and extending downwards from the intermediate portion 61. In this position the rim 4 of the wheel 2 can be engaged more easily by the portion 65 of the operating arm 62 when the trolley 9 is being displaced from the removal position into the rest position.

As a result of the interaction with the wheel 2, the lever 60 reaches a second operating position (Figures 1,2 and 5), in which the operating arm 62 extends substantially in the horizontal direction T and the pressing arm 63 extends substantially in the vertical direction S.

Preferably, said operating positions of the lever 60 are defined by the abutment of a pin 67 attached to the cross member 39 with respective opposite end edges of a slot 68 provided in the intermediate portion 61 of said lever 60.

The mode of operation of the support device 1 will be described below starting from the rest configuration illustrated in Figures 1 and 2, in which said device 1 maintains the wheel 2 suspended from the vehicle frame 3.

In said configuration, the guide sections 11 are arranged in the raised position and they are connected by means of the safety hooks 66 to the respective side members 14, whereas the trolley 9 is arranged in the rest position on the guide sections 11 and it is fastened to the cross member 39 of the frame 3 by means of the connecting assemblies 40. The wheel 2, which is concealed in the compartment 8, is clamped substantially in the vertical direction S between the supports 34 and the operating arm 62 of the lever 60 on the one hand, and the guide sections 11 and the trolley 9 on the other hand. Moreover, the wheel 2 is locked laterally between the lever 60 and the structure 35 of the frame 3.

The removal of the spare wheel 2 takes place as follows.

Firstly, the safety hooks 66 are uncoupled from the respective guide sections 11 and the split pins 56 are withdrawn from the respective coupling elements 43.

At this point, by applying a spanner to the nuts 57 the sleeves 53 are partially unscrewed along the respective tie rods 51 so as to achieve partial lowering of the assembly formed by the trolley 9, by the wheel 2 and by the guide sections 11, and slackening the tension on the connecting assemblies 40.

The completion of the lowering of the guide sections 11 and of the trolley 9 is effected by gravity, the coupling elements 43 being disengaged from the associated receiving elements 41. In particular, by moving the coupling elements 43 in opposite directions in the direction E there is effected lateral disengagement of the enlarged portions 50 of the sleeves 53 from the associated C-shaped seatings 42 of the receiving elements 41. To prevent sudden lowering of the trolley 9 and of the guide sections 11 as a result of the considerable weight of the wheel 2, the trolley 9 has to be accompanied during its displacement by holding it with the operating bar 24.

The guide sections 11 can then rotate about the axis B until reaching the lowered position and the trolley 9 can slide along said sections 11 from the rest position into the removal position (Figure 1, dashed line), in which it is partly removed from the compartment 8 and it projects outwardly with the respect to the vehicle so as to allow the wheel 2 to be withdrawn. In this position, the wheel 2 can be freed from the trolley 9 by acting on the screw 33 or the trolley 9 and the wheel 2 can be uncoupled from the guide sections 11 by removing the end stops 21.

The mounting of the trolley 9 on the vehicle takes place substantially by repeating the above-described sequence of operations in reverse order.

In particular, the trolley 9 provided with a replacement wheel or with the spare wheel 2 is caused to slide on the guide sections 11 from the removal position towards the rest and raised position, holding it with the operating bar 24, towards the side members 14.

As a result of the C-configuration of the guide cavities 20 in which the rollers 27 of the trolley 9 are engaged, the raising of the trolley necessarily brings about the rotation of the guide sections 11 towards the raised position.

When the receiving elements 41 are aligned horizontally with the enlargements 50 of the respective coupling elements 43, the latter are displaced in opposite directions in the direction E until reaching the coupling configuration with said receiving elements 41. More precisely, the enlargement 50 of each coupling element 43 is inserted in the direction E into the seating 42 of the associated receiving element 41 abutting upwardly against the edge 47.

At this stage, the rim 4 of the wheel 2 upwardly comes into contact with the free end of the operating arm 62 of the lever 60 causing it to rotate about the axis D in a clockwise direction with reference to the accompanying drawings. In particular, the operating arm 62 receives from the rim 4 an actuating force in the vertical direction S. The rotation of the operating arm 62 brings about a corresponding angular displacement about the axis D of the pressing arm 63 which interacts with the tread 6a of the wheel 2 by pressing said wheel 2 in the horizontal direction T into abutment with the opposing structure 35.

At this point tension is exerted on the connecting assemblies 40 by screwing the sleeves 53 on to the respective tie rods 51 by means of a spanner. The mounting operation is then completed by securing the guide sections 11 to the side members 14 of the frame 3 by means of the safety hooks 66 and by inserting the split pins 56 through the respective coupling elements 43.

The advantages achieved with the present invention are apparent from a study of the features of the support device 1 designed in accordance with therewith.

In particular, as a result of the lateral engagement and disengagement between the coupling elements 43 and the associated receiving elements 41, the removal of the spare wheel 2 and its positioning in the vehicle compartment 8 are carried out easily and they can be readily performed even in vertically limited spaces. In fact, after a first stage of unscrewing the sleeves 53 along the associated tie rods 51 so as to slacken the tension on the connecting assemblies 40, it is possible to proceed directly with the lateral disengagement of the coupling elements 43 from the associated receiving elements 41 as soon as the space available under the trolley for the possible completion of the unscrewing operation becomes insufficient owing to the gradual lowering of said trolley 9.

It is evident that the support device 1 can be subject to modifications and variants which do not depart from the scope of protection defined by the claims.

## Claims

1. A support device (1) for a spare wheel (2) of a vehicle, in particular a commercial vehicle, comprising:
- guide means (7) adapted to be connected to a frame (3) of said vehicle so as to be able to rotate about an approximately horizontal axis of rotation axis (B), between a raised position and a lowered position, and defining with said frame (3) a: compartment (8) for accommodating said spare wheel (2);
- a trolley (9) adapted to carry said spare wheel (2) movable along said guide means (7) between a rest position inside said compartment (8) and a removal position in which it is at least partly removed from said compartment (8) so as to allow the withdrawal of said spare wheel (2) and
- releasable fastening means (10) acting in an approximately vertical connecting direction (C) and in a position spaced apart from said axis of rotation (B) for fastening to said frame (3) said guide means (7) in said raised position and said trolley (9) in said rest position;
**characterised in that** said trolley (9) is able to rotate integrally with said guide means (7) about said rotation axis (B) and said fastening means (10) comprise at least one coupling element (43) which is connected in a swinging manner either to said frame (3) or to said trolley and which is displaceable in a swinging direction (E) transverse to said connecting direction (C) to and from a coupling configuration with a receiving element (41) associated either with said frame (3) or with said trolley (9).

2. A device according to claim 1, **characterised in that** said receiving element (41) defines a substantially C-shaped seating (42) with its concavity turned towards said swinging direction (E) so as to allow the insertion and removal of a coupling portion (50) of said coupling element (43).

3. A device according to claim 2, **characterised in that** said coupling portion (50) of said coupling element (43) projects outwardly with respect to an adjacent portion, and **in that** said receiving element (41) has an abutment portion (47) peripherally covering said seating (42) and co-operating in abutment with said coupling portion (50) of said coupling element (43) in said coupling configuration so as to prevent the lowering of said trolley (9) and said guide means (7).

4. A device according to claim 3, **characterised in that** said seating (42) increases in section in a direction parallel to the said connecting direction (C) starting from a C-shaped end opening (48) bounded by said abutment portion (47).

5. A device according to any one of the preceding claims, **characterised in that** said coupling element (43) is adapted to be connected to attachment means (39,55) secured to said frame (3), and **in that** said receiving element (41) is carried by said trolley (9), to which it is attached.

6. A device according to any one of the preceding claims, **characterised in that** said fastening means (10) comprise releasable clamping means (51,53) acting in said connecting direction (C) and which can be actuated selectively following the coupling between said receiving and coupling elements (41,43) so as to clamp said spare wheel (2) between said frame (3) and the assembly formed by said guide means (7) in said raised position and by said trolley (9) in said rest position.

7. A device according to claim 6, **characterised in that** said coupling element (43) comprises an externally threaded tie rod (51) and an internally threaded sleeve (53) engaged by said tie rod (51) and defining with said sleeve (53) said clamping means.

8. A device according to any one of the preceding claims, **characterised by** comprising two of said receiving elements (41) extending on opposite sides of said trolley (9) in a position spaced apart from said axis of rotation (B), and two of said coupling elements (43).

9. A device according to any one of the preceding claims, **characterised in that** said guide means (7) comprise a pair of guide sections (11) extending parallel to one another, having corresponding ends (12) hinged about said axis of rotation (B) to respective side members (14) of said frame (3), and engaged slidingly by respective rollers (27) of said trolley (9).

## Patentansprüche

1. Halteeinrichtung (1) für ein Ersatzrad (2) eines Fahrzeugs, insbesondere eines Nutzfahrzeugs, mit:
- Führungsmitteln (7), die dazu ausgestaltet sind, mit einem Rahmen (3) des Fahrzeugs verbunden zu werden, so dass sie sich um eine annähernd horizontale Achse einer Drehachse (B) herum drehen können, und zwar zwischen einer angehobenen und einer abgesenkten Position, und die mit dem Rahmen (3) ein Fach (8) zum Aufnehmen des Ersatzrads (2) definieren;
- einem Rollwagen (9) zum Tragen des Ersatzrads (2), der entlang den Führungsmitteln (7) zwischen einer Ruheposition innerhalb des Fachs (8) und einer Entnahmeposition beweglich ist, in welcher er zumindest teilweise aus dem Fach (8) entfernt ist, so dass das Entnehmen des Ersatzrads (2) möglich ist; und
- lösbaren Befestigungsmitteln (10), die in einer annähernd vertikalen Verbindungsrichtung (C) wirken und in einer Position beabstandet von der Drehachse (B), zum Befestigen der Führungsmittel (7) in der angehobenen Position und des Rollwagens (9) in der Ruheposition an dem Rahmen;
**dadurch gekennzeichnet, dass** der Rollwagen (9) sich integral mit den Führungsmitteln (7) um die besagte Drehachse (B) herum drehen kann und dass die Befestigungsmittel (10) zumindest ein Kopplungselement (43) aufweisen, welches auf schwingende Art und Weise entweder an dem Rahmen (3) oder an dem Rollwagen angebracht ist und welches in einer Schwingrichtung (E) quer zu der Verbindungsrichtung (C) in eine Kopplungskonfiguration mit einem Aufnahmeelement (41) und aus dieser Konfiguration heraus verschiebbar ist, welches Aufnahmeelement (41) entweder dem Rahmen (3) oder dem Rollwagen (9) zugeordnet ist.

2. Einrichtung nach Anspruch 1, **dadurch gekennzeichnet, dass** das Aufnahmeelement (41) einen im Wesentlichen C-förmigen Sitz (42) definiert, wobei seine Konkavität zu der Schwingrichtung (E) hin gedreht ist, um so das Einbringen und Herausnehmen eines Kopplungsbereichs (50) des Kopplungselements (43) zu ermöglichen.

3. Einrichtung nach Anspruch 2, **dadurch gekennzeichnet, dass** der Kopplungsbereich (50) des Kopplungselements (43) aufwärts mit Bezug auf einen benachbarten Bereich hervorsteht und das Aufnahmeelement (41) einen Anschlagbereich (47) hat, der den Sitz (42) von außen abdeckt und im Anschlag mit dem Kopplungsbereich (50) des Kopplungselements (43) in der Kopplungskonfiguration zusammenwirkt, um so das Absinken des Rollwagens (9) und der Führungsmittel (7) zu verhindern.

4. Einrichtung nach Anspruch 3, **dadurch gekennzeichnet, dass** der Sitz (42) im Querschnitt in einer Richtung parallel zu der besagten Verbindungsrichtung (C) zunimmt, beginnend mit einer C-förmigen Endöffnung (48), welche von dem besagten Anschlagbereich (47) begrenzt ist.

5. Einrichtung nach einem der vorangehenden Ansprüche, **dadurch gekennzeichnet, dass** das Kopplungselement (43) dazu ausgestaltet ist, mit Anbringmitteln (39, 55) verbunden zu werden, die an dem Rahmen (3) gesichert sind, und das Aufnahmeelement (41) von dem Rollwagen (9) getragen wird, an welchem es angebracht ist.

6. Einrichtung nach einem der vorangehenden Ansprüche, **dadurch gekennzeichnet, dass** die Befestigungsmittel (10) lösbare Klemmmittel (51, 53) aufweisen, welche in der Verbindungsrichtung (C) wirken und welche selektiv anschließend an die Kopplung zwischen den Aufnahme- und Kopplungselementen (41, 43) betätigt werden können, um das Ersatzrad (2) zwischen dem Rahmen (3) und der Anordnung zu verklemmen, die von den Führungsmitteln (7) in der angehobenen Position und von dem Rollwagen (9) in der Ruheposition gebildet wird.

7. Einrichtung nach Anspruch 6, **dadurch gekennzeichnet, dass** das Kopplungselement (43) eine Außengewinde-Zugstange (51) und eine Innengewindehülse (53) aufweist, welche von der Zugstange (51) in Eingriff genommen wird und mit der Hülse (53) die Klemmmittel definiert.

8. Einrichtung nach einem der vorangehenden Ansprüche, **dadurch gekennzeichnet, dass** die Einrichtung zwei der besagten Aufnahmeelemente (41) aufweist, welche sich auf gegenüberliegenden Seiten des Rollwagens (9) in einer Position beabstandet von der Drehachse (B) erstrecken, und zwei der besagten Kopplungselemente (43).

9. Einrichtung nach einem der vorangehenden Ansprüche, **dadurch gekennzeichnet, dass** die Führungsmittel (7) zwei Führungsabschnitte (11) aufweisen, welche sich parallel zueinander erstrecken, entsprechende Enden (12) haben, die an jeweiligen Seitenelementen (14) des Rahmens (3) um die besagte Drehachse (B) herum gelenkig angebracht sind, und von jeweiligen Rollen (27) des Rollwagens (9) gleitend in Eingriff genommen sind.

## Revendications

1. Dispositif de support (1) pour une roue de secours (2) d'un véhicule, en particulier d'un véhicule utilitaire, comprenant :
- des moyens de guidage (7) adaptés pour être raccordés à un châssis (3) dudit véhicule afin de pouvoir tourner autour d'un axe approximativement horizontal d'un axe de rotation (B), entre une position relevée et une position abaissée, et définissant avec ledit châssis (3) un compartiment (8) pour loger ladite roue de secours (2) ;
- un chariot (9) adapté pour transporter ladite roue de secours (2), déplaçable le long desdits moyens de guidage (7) entre une position de repos à l'intérieur dudit compartiment (8) et une position d'extraction, dans laquelle il est au moins partiellement extrait dudit compartiment (8) afin de permettre de retirer ladite roue de secours (2) et
- des moyens de fixation pouvant être dégagés (10), agissant dans une direction de raccordement (C) approximativement verticale et dans une position espacée dudit axe de rotation (B) pour fixer audit châssis (3) lesdits moyens de guidage (7) dans ladite position relevée et ledit chariot (9) dans ladite position de repos ;
**caractérisé en ce que** ledit chariot (9) peut tourner intégralement avec lesdits moyens de guidage (7) autour dudit axe de rotation (B) et **en ce que** lesdits moyens de fixation (10) comprennent au moins un élément de couplage (43) qui est raccordé d'une manière oscillante soit audit châssis (3), soit audit chariot, et qui est déplaçable dans une direction d'oscillation (E) transversalement par rapport à ladite direction de raccordement (C) vers et à partir d'une configuration de couplage avec un élément récepteur (41) associé soit audit châssis (3), soit audit chariot (9).

2. Dispositif selon la revendication 1, **caractérisé en ce que** ledit élément récepteur (41) définit un appui sensiblement en forme de C (42) dont la concavité est tournée vers ladite direction d'oscillation (E) afin de permettre l'insertion et le retrait d'une partie de couplage (50) dudit élément de couplage (43).

3. Dispositif selon la revendication 2, **caractérisé en ce que** ladite partie de couplage (50) dudit élément de couplage (43) fait saillie vers l'extérieur par rapport à une partie adjacente, et **en ce que** ledit élément récepteur (41) possède une partie de butée (47) couvrant de manière périphérique ledit appui (42) et coopérant en butée avec ladite partie de couplage (50) dudit élément de couplage (43) dans ladite configuration de couplage afin d'empêcher l'abaissement dudit chariot (9) et desdits moyens de guidage (7).

4. Dispositif selon la revendication 3, **caractérisé en ce que** ledit appui (42) augmente en section dans une direction parallèle à ladite direction de raccordement (C) partant d'une ouverture d'extrémité en forme de C (48) limitée par ladite partie de butée (47).

5. Dispositif selon l'une quelconque des revendications précédentes, **caractérisé en ce que** ledit élément de couplage (43) est adapté pour être raccordé à des moyens de fixation (39, 55) fixés audit châssis (3), et **en ce que** ledit élément récepteur (41) est porté par ledit chariot (9), auquel il est fixé.

6. Dispositif selon l'une quelconque des revendications précédentes, **caractérisé en ce que** lesdits moyens de fixation (10) comprennent des éléments de serrage pouvant être dégagés (51, 53), agissant dans ladite direction de raccordement (C) et qui peuvent être actionnés sélectivement suivant le couplage entre ledit élément récepteur et ledit élément de couplage (41, 43), afin de serrer ladite roue de secours (2) entre ledit châssis (3) et ledit assemblage formé par lesdits moyens de guidage (7) dans ladite position relevée et par ledit chariot (9) dans ladite position de repos.

7. Dispositif selon la revendication 6, **caractérisé en ce que** ledit élément de couplage (43) comprend un tirant d'assemblage fileté à l'extérieur (51) et un manchon fileté à l'intérieur (53) mis en prise par ledit tirant d'assemblage (51) et définissant avec ledit manchon (53) lesdits moyens de serrage.

8. Dispositif selon l'une quelconque des revendications précédentes, **caractérisé en ce qu'**il comprend deux desdits éléments récepteurs (41) s'étendant sur les côtés opposés dudit chariot (9) dans une position espacée dudit axe de rotation (B), et deux desdits éléments de couplage (43).

9. Dispositif selon l'une quelconque des revendications précédentes, **caractérisé en ce que** lesdits moyens de guidage (7) comprennent une paire de profilés de guidage (11) s'étendant parallèlement l'un par rapport à l'autre, ayant des extrémités (12) correspondantes articulées autour dudit axe de rotation (B) par rapport à des éléments latéraux (14) respectifs dudit châssis (3), et mis en prise de manière coulissante par des galets (27) respectifs dudit chariot (9).
